# EUROPEAN PATENT APPLICATION

(11) **EP 4 527 684 A1**
(43) Date of publication of application: **26.03.2025**
(21) Application number: 23806697.1
(22) Date of filing: 24.04.2023
(51) Int. Cl.: B60N 2/22

(54) **SMALL CONTINUOUS ANGLE ADJUSTER**

(30) Priority: 20.05.2022 CN 202210550839
(71) Applicant: Keiper (Changshu) Seating Mechanisms Co., Ltd., Suzhou, Jiangsu 215500 (CN); KEIPER Seating Mechanisms Co., Ltd., Pudong Shanghai 201315 (CN)
(72) Inventor: LI, Cong, Suzhou, Jiangsu 215500 (CN); LIANG, Hongbing, Suzhou, Jiangsu 215500 (CN); GUO, Jinbao, Suzhou, Jiangsu 215500 (CN); HU, Jianyong, Suzhou, Jiangsu 215500 (CN); TANG, Yunhua, Suzhou, Jiangsu 215500 (CN)
(74) Representative: Hoefer & Partner Patentanwälte mbB
(86) International application number: PCT/CN2023/090195
(87) International publication number: WO 2023/221744

(57) **Abstract**

A small continuous angle adjuster, characterized in that a neck ring (2.1) is provided with a center point (O); a tooth surface of an outer tooth gear of a gear tooth plate (2) and a tooth surface of an inner tooth ring of a gear ring tooth plate (3) have a contact point (D); the center point (O) and the contact point (D) are connected to form a first connecting line (OD); each tooth of the outer tooth gear of the gear tooth plate (2) is provided with a first working arc section (a-b), and the first working arc section (a-b) of a contact tooth of the gear tooth plate (2) is provided with a first arc section center point (O₁); each tooth of the inner tooth ring of the gear ring tooth plate (3) is provided with a second working arc section (c-d), and the second working arc section (c-d) of a contact tooth of the gear ring tooth plate (3) is provided with a second arc section center point (O₂); the first arc section center point (O₁) and the second arc section center point (O₂) are connected to form a second connecting line (O₁O₂), and the contact point (D) is located on the second connecting line (O₁O₂); and an included angle between the first connecting line (OD) and the second connecting line (O₁O₂) ranges from 85 degrees to 95 degrees. In practical applications, the radial component force on the tooth surfaces is reduced as much as possible, and adverse phenomena such as tooth sliding and reverse driving are not easily encountered, such that, through the design of the tooth shape, the anti-pressure, anti-bending and fatigue strength of a tooth portion is improved, the strength of the angle adjuster is enhanced, and under the conditions where the strength is kept unchanged, the angle adjuster has a smaller diameter and a lighter weight, thereby making same lightweight.

## Description

### BACKGROUND OF THE INVENTION

### 1. Field of the Invention

The present invention relates to a car seat, and more specifically to a small continuous angle adjuster.

### 2. Related Art

With the rise of new energy vehicles and the increasing implementation of carbon neutrality policies, lightweighting at the component level is imminent. For angle adjuster products, it is the market demand to reduce the size and weight as much as possible while maintaining the same strength level. While downsizing the car seat angle adjuster, the strength requirements for the angle adjuster continue to increase. How to innovate the structure to reduce the size and weight of the angle adjuster while ensuring its strength is a significant challenge faced by manufacturers of car seat angle adjusters.

### SUMMARY OF THE INVENTION

The invention provides a small continuous angle adjuster, which can reduce the size and weight of the angle adjuster while ensuring its strength.

The small continuous angle adjuster according to the present invention comprises a gear tooth plate and a gear ring tooth plate that can rotate relative to each other, wherein the gear tooth plate is provided with an outer tooth gear, wherein the gear ring tooth plate is provided with an inner tooth ring, wherein the gear tooth plate and the gear ring tooth plate are connected with each other through the outer tooth gear and the inner tooth ring that mesh with each other, and wherein the gear tooth plate is provided with a neck ring that is concentric with the outer tooth gear; and an eccentric member driven by a drive cam, wherein the eccentric member rotates in the circumferential direction to drive the relative rolling motion of the gear tooth plate and the gear ring tooth plate; wherein the neck ring is provided with a center point, wherein the tooth surface of the outer tooth gear of the gear tooth plate and the tooth surface of the inner tooth ring of the gear ring tooth plate have a contact point, wherein the center point and the contact point are connected to form a first connecting line, wherein each tooth of the outer tooth gear of the gear tooth plate is provided with a first working arc section, and the first working arc section of a contact tooth of the gear tooth plate is provided with a first arc section center point, wherein each tooth of the inner tooth ring of the gear ring tooth plate is provided with a second working arc section, and the second working arc section of a contact tooth of the gear ring tooth plate is provided with a second arc section center point, wherein the first arc section center point and the second arc section center point are connected to form a second connecting line, wherein the contact point is located on the second connecting line, and an included angle between the first connecting line and the second connecting line ranges from 85 degrees to 95 degrees.

Preferably, the first working arc section of the contact tooth of the gear tooth plate is provided with a first arc radius, wherein the second working arc section of the contact tooth of the gear ring tooth plate is provided with a second arc radius, and wherein a ratio of the first arc radius to the second arc radius is between 1.05 and 1.15.

Preferably, each tooth of the outer tooth gear of the gear tooth plate is provided with a first tooth profile width, wherein each tooth of the inner tooth ring of the gear ring tooth plate is provided with a second tooth profile width, and wherein a tooth width ratio of the first tooth profile width to the second tooth profile width is between 1.1 and 1.6.

Preferably, the drive cam is provided with a cylindrical segment axially inserted into the neck ring.

Preferably, a clearance between the cylindrical segment and the neck ring is between 0.05mm and 0.15mm.

Preferably, the drive cam is a single part formed as a whole.

Preferably, a wedge and a spring work together to define the eccentric member to press the outer tooth gear of the gear tooth plate into the inner tooth ring of the gear ring tooth plate at the meshing position.

Preferably, the gear tooth plate is provided with a first step surface for supporting the wedge, wherein the gear ring tooth plate is provided with a flange boss, and the first step surface is close to the top surface of the flange boss.

Preferably, the gear tooth plate is provided with a boss for connecting the small continuous angle adjuster to an external connecting plate and a third step surface for supporting the external connecting plate, wherein the gear tooth plate is also provided with a second step surface formed simultaneously with the third step surface as a stamping surface, and wherein the first step surface and the second step face are on the same plane.

Preferably, a distance between the second step surface and the third step surface is a material thickness of the gear tooth plate.

Preferably, the small continuous angle adjuster further comprises a clamping ring for holding the gear tooth plate and the gear ring tooth plate together.

Preferably, the third step surface is provided with a protruding height so that the external connecting plate is placed on the third step surface while avoiding the clamping ring.

Preferably, the wedge is supported on the neck ring by its curved inner surface, and carries the gear ring tooth plate by its curved outer surface.

Preferably, the drive cam is provided with a drive segment, wherein the wedge is composed of two wedge-shaped segments, wherein the drive segment is inserted into a clearance between narrow sides of the two wedge-shaped segments, and wherein two ends of the spring are respectively connected to broad sides facing each other of the two wedge-shaped segments to force the two wedge-shaped segments to separate by acting on the wedge-shaped segments in the circumferential direction through the spring.

Preferably, the small continuous angle adjuster further comprises a friction bearing, which is arranged between the curved outer surface of the wedge and a center hole of the gear ring tooth plate.

Preferably, the small continuous angle adjuster further comprises a cover, which is mounted over the drive cam and fixedly connected to the gear ring tooth plate.

According to the small continuous angle adjuster of the present invention, the contact point is located on the second connecting line, and an included angle between the first connecting line and the second connecting line ranges from 85 degrees to 95 degrees. The radial component force on the tooth surfaces is reduced as much as possible, and adverse phenomena such as tooth sliding and reverse driving are not easily encountered, such that, through the design of the tooth shape, the anti-pressure, anti-bending and fatigue strength of a tooth portion is improved, the strength of the angle adjuster is enhanced, and under the conditions where the strength is kept unchanged, the angle adjuster has a smaller diameter and a lighter weight, thereby making same lightweight. In summary, the small continuous angle adjuster of the present invention innovates in structure, further simplifies the manufacturing process of the parts, and ensures high strength level while reducing weight and size and meeting market demands.

### BRIEF DESCRIPTION OF THE DRAWINGS

FIG. 1 is an exploded view of a small continuous angle adjuster according to a preferred embodiment of the present invention;
FIG. 2 is a cross-sectional view of a small continuous angle adjuster according to a preferred embodiment of the present invention;
FIG. 3 shows the meshing tooth profile of the gear tooth plate and the gear ring tooth plate of the small continuous angle adjuster of FIGS. 1-2;
FIG.4 is a partial enlarged view of FIG.3;
FIG. 5 further shows the meshing tooth profile of the gear tooth plate and the gear ring tooth plate of the small continuous angle adjuster of FIGS. 1-2;
FIG. 6 shows the supporting action of the cylindrical segment of the drive cam of the small continuous angle adjuster of FIGS. 1-2;
FIG. 7 shows the offset force arm of the small continuous angle adjuster of FIGS. 1-2;
FIG. 8 is a schematic view of the gear tooth plate of an angle adjuster of the prior art;
FIG. 9 shows the flush step surfaces of the gear tooth plate of the small continuous angle adjuster in FIGS. 1-2.

### DESCRIPTION OF THE ENABLING EMBODIMENT

The preferred embodiments of the present invention are described in detail below in conjunction with the accompanying drawings.

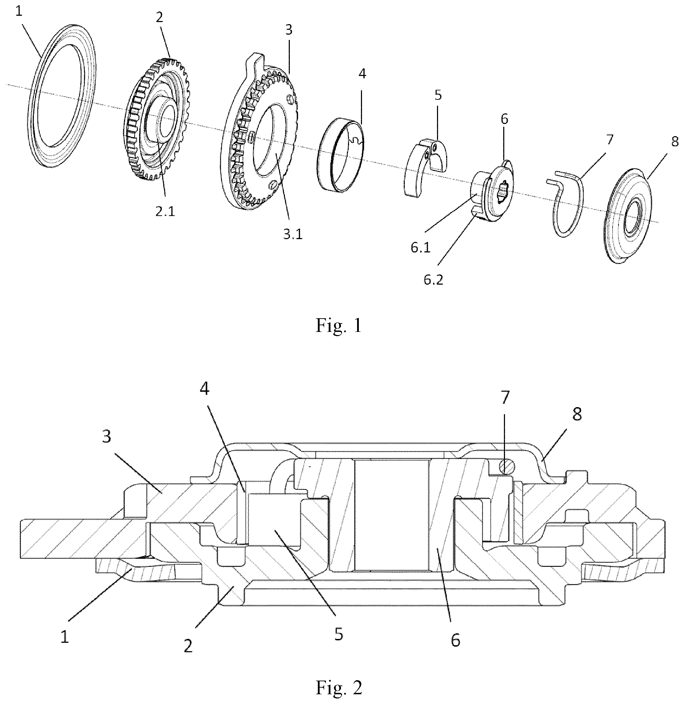

As shown in FIGS. 1-2, a small continuous angle adjuster according to a preferred embodiment of the present invention comprises a clamping ring 1, a gear tooth plate 2 and a gear ring tooth plate 3, wherein the gear tooth plate 2 and the gear ring tooth plate 3 are configured to rotate relative to each other, and the clamping ring 1 is used to hold the gear tooth plate 2 and the gear ring tooth plate 3 together. In this embodiment, the clamping ring 1 for absorbing the axial force is fixedly connected to the gear ring tooth plate 3. It should be understood that the clamping ring 1 does not interfere with the relative rotation of the gear tooth plate 2 and the gear ring tooth plate 3.

For the installation of the small continuous angle adjuster, the gear tooth plate 2 can be mounted on the seat, and the gear ring tooth plate 3 can be mounted on the backrest to adjust the inclination angle of the backrest relative to the seat. Of course, the mounting positions of the gear tooth plate 2 and the gear ring tooth plate 3 can be interchanged, i.e., the gear tooth plate 2 can be mounted on the backrest, and the gear ring tooth plate 3 can be mounted on the seat.

The gear tooth plate 2 and the gear ring tooth plate 3 are connected to each other via gears to adjust and fix in place. In order to form a gear connection, an outer tooth gear is formed on the gear tooth plate 2, and an inner tooth ring is formed on the gear ring tooth plate 3, with the outer tooth gear and the inner tooth ring meshing with each other. The diameter of an outer tooth tip circle of the outer tooth gear is smaller than the diameter of an inner tooth root circle of the inner tooth ring by at least one tooth height. The outer tooth gear and the inner tooth ring differ by at least one tooth in the number of teeth, which allows the inner tooth ring to perform a rolling motion on the outer tooth gear.

The gear tooth plate 2 is provided with a neck ring 2.1 that is concentric with the outer tooth gear. The small continuous angle adjuster according to the present embodiment further comprises a wedge 5, which is supported on the neck ring 2.1 by its curved inner surface and carries the gear ring tooth plate 3 by its curved outer surface. Correspondingly, the small continuous angle adjuster according to the present embodiment further comprises a friction bearing 4, which is arranged between the curved outer surface of the wedge 5 and a center hole 3.1 of the gear ring tooth plate 3. In addition, the small continuous angle adjuster according to the present embodiment further comprises a drive cam 6, wherein a cylindrical segment 6.1 that extends out axially is inserted into the neck ring 2.1 and is provided with a boring hole in the center for accepting and matching a drive shaft to drive the drive cam 6 by the drive shaft. In this embodiment, the drive cam 6 is a metal piece. Furthermore, the drive cam 6 is provided with a drive segment 6.2. The wedge 5 is composed of two wedge-shaped segments, and the drive segment 6.2 of the drive cam 6 is inserted into a clearance between narrow sides of the two wedge-shaped segments. Moreover, the small continuous angle adjuster according to the present embodiment further comprises a spring 7, whose two ends are respectively connected to broad sides facing each other of the two wedge-shaped segments to force the two wedge-shaped segments to separate by acting on the wedge-shaped segments in the circumferential direction through the spring 7. In this way, the wedge 5 and the spring 7 work together to define an eccentric member, which is used to press the outer tooth gear of the gear tooth plate 2 into the inner tooth ring of the gear ring tooth plate 3 at the meshing position. Furthermore, the small continuous angle adjuster according to the present embodiment further comprises a cover 8, which is mounted over the drive cam 6 and fixedly connected to the gear ring tooth plate 3.

The specific assembly process of the small continuous angle adjuster according to the present embodiment comprises: the friction bearing 4 is pressed into the center hole 3.1 of the gear ring tooth plate 3 with an interference fit; the outer tooth gear of the gear tooth plate 2 is meshed with the inner tooth ring of the gear ring tooth plate 3; the cylindrical segment 6.1 of drive cam 6 is embedded in the neck ring 2.1 of the gear tooth plate 2; the two ends of the spring 7 are respectively inserted into the holes of broad sides of the two wedge-shaped segments of wedge 5; the wedge 5 is placed in the space formed by the friction bearing 4 and the neck ring 2.1, and is kept in close contact; the clamping ring 1 is connected to the gear ring tooth plate 3 by welding; and the cover 8 is welded to the gear ring tooth plate 3.

The specific working mechanism of the small continuous angle adjuster according to the present embodiment comprises: during the driving process by rotating the drive shaft, the torque is first transmitted to the drive cam 6, and then passed to the eccentric member (formed by the wedge 5 and the spring 7) through the drive segment 6.2. The eccentric member slides along the friction bearing 4, causing a displacement in its eccentric direction, and thus the meshing position of the outer tooth gear of the gear tooth plate 2 within the inner tooth ring of the gear ring tooth plate 3 is shifted. This allows for continuous and variable adjustment of the inclination of the backrest.

In particular, according to the small continuous angle adjuster of the present invention, the tooth shape of the gear tooth plate 2 and the gear ring tooth plate 3 are designed to improve the anti-pressure, anti-bending and fatigue strength of the tooth portion, so that the gear tooth plate 2 and the gear ring tooth plate 3 of the same diameter have higher strength. Under the conditions where the strength is kept unchanged, the tooth shape of the gear tooth plate 2 and the gear ring tooth plate 3 are designed to make sure the gear tooth plate 2 and the gear ring tooth plate 3 and the clamping ring 1 thereof have a smaller diameter and a lighter weight, thereby achieving lightweighting.

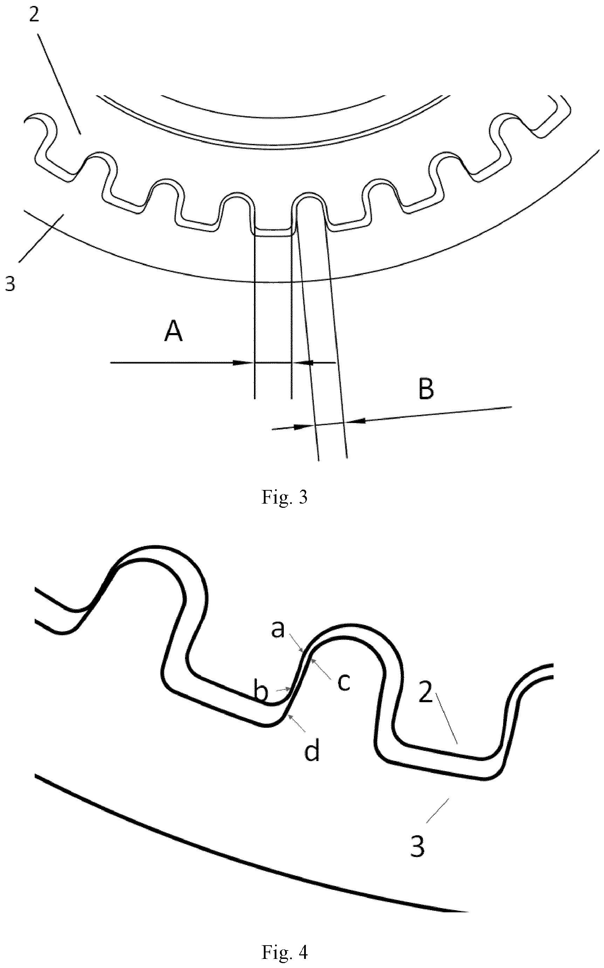

As shown in FIG.3, a tooth profile width of the gear tooth plate 2 is A, and a tooth profile width of the gear ring tooth plate 3 is B. In the present invention, a tooth width ratio A/B is between 1.1 and 1.6. In this way, while ensuring the dynamic strength, the strength of the teeth under fatigue conditions is also guaranteed.

As shown in FIG.4, each tooth of the outer tooth gear of the gear tooth plate 2 is provided with a working arc section a-b, and each tooth of the inner tooth ring of the gear ring tooth plate 3 is provided with a working arc section c-d, which are designed to mesh with each other.

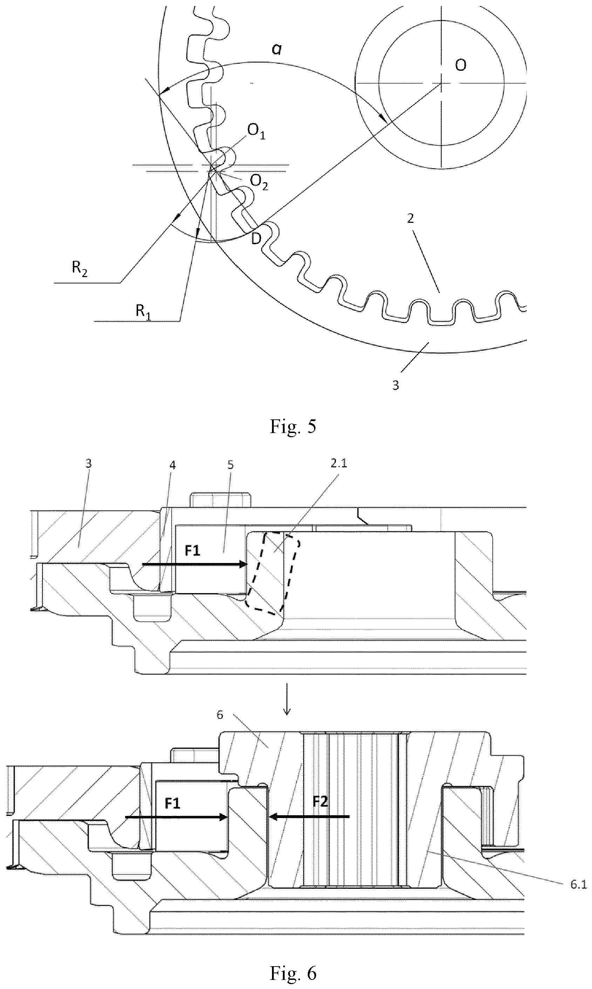

As shown in FIG. 5, taking the contact tooth as an example, the working arc section a-b (see FIG. 4) of the contact tooth of the gear tooth plate 2 is provided with an arc section center point O₁ and an arc radius R₁, and the working arc section c-d (see FIG. 4) of the contact tooth of the gear ring tooth plate 3 is provided with an arc section center point O₂ and an arc radius R₂. O is the center point of the neck ring 2.1 of the gear tooth plate 2, and the contact point D of the tooth surface of the gear tooth plate 2 and the tooth surface of the gear ring tooth plate 3 is located on a connecting line of the arc section center point O₁ and the arc section center point O₂, and the included angle between the connecting line OD and the connecting line O₁D (i.e., O₁O₂) ranges from 85 degrees to 95 degrees. In this way, the radial component force on the tooth surfaces can be reduced as much as possible, and adverse phenomena such as tooth sliding and reverse driving are not easily encountered. In addition, a ratio R₁/R₂ of the arc radius R₁ to the arc radius R₂ is between 1.05 and 1.15 (slightly greater than 1). Such a design approach can increase the contact area between the two teeth when they are subjected to force, enhance the compressive strength of the tooth surface and have a beneficial impact on both fatigue and dynamic strength.

In particular, the drive cam 6 of the small continuous angle adjuster of the present invention is inserted into the neck ring 2.1 through the cylindrical segment 6.1 to enhance the strength of the angle adjuster. Under the conditions where the strength is kept unchanged, the gear tooth plate 2 and the gear ring tooth plate 3 and the clamping ring 1 thereof have a smaller diameter and a lighter weight, thereby achieving lightweighting. Moreover, the drive cam 6 of the small continuous angle adjuster of the present invention is a single part formed as a whole, that is, the cylindrical segment 6.1 and the drive segment 6.2 are integrally formed on the main body. Compared to a split-type drive system composed of multiple parts (such as three parts), the manufacturing process and assembly process of the drive cam 6 of the present invention are both simplified.

The force transmission situation of the small continuous angle adjuster of the present invention is shown in FIG.6. The external force F1 is transmitted through the gear ring tooth plate 3, the friction bearing 4 and the wedge 5, and ultimately acts on the neck ring 2.1 of the gear tooth plate 2. The neck ring 2.1 generates a resistance force by its own deformation. If the deformation of the neck ring 2.1 is too large, it will cause the angle adjuster to slip teeth, that is, strength failure, so the strength of the neck ring 2.1 itself directly affects the strength of the angle adjuster. Due to the limitations of precision stamping manufacturing processes, the neck ring 2.1 cannot be infinitely thickened and strengthened, so the neck ring 2.1 often becomes the bottleneck that limits the increase in the strength of the angle adjuster. The present invention effectively resists the deformation of the neck ring 2.1 by inserting the cylindrical segment 6.1 of the drive cam 6 into the neck ring 2.1, and improves the strength. It should be understood that in applications with low-strength conditions, the deformation of the neck ring 2.1 is very small, and the material of the drive cam 6 can be changed accordingly to, for example, plastic, etc.

The fit between the cylindrical segment 6.1 of the drive cam 6 and the neck ring 2.1 of the gear tooth plate 2 initially requires a clearance, because the drive cam 6 performs a rotational movement within the neck ring 2.1 to drive the angle adjuster. If there is no clearance or the clearance is too small, it will cause difficulty in assembly and an increase in operational torque. However, from a strength perspective, the smaller the clearance between the cylindrical segment 6.1 and the neck ring 2.1, the better, as it allows the cylindrical segment 6.1 to resist the deformation of the deformation of the neck ring 2.1 even if the neck ring 2.1 undergoes a slight deformation. The present invention achieves a balance between these two considerations through tolerance analysis and finite element strength calculation software analysis. Specifically, the clearance between the cylindrical segment 6.1 of the present invention and the neck ring 2.1 is between 0.05mm and 0.15mm. This ensures smooth installation and operation of the drive cam 6 while keeping as close as possible to the inner surface of the neck ring 2.1. When the neck ring 2.1 undergoes a small deformation due to force, it comes into contact with the cylindrical segment 6.1 of the drive cam 6, and the cylindrical segment 6.1 begins to provide a reaction force F2 to help the neck ring 2.1 resist its own deformation, thereby enhancing the strength of the angle adjuster. That is, it provides timely and strong support to the neck ring 2.1 in high-strength conditions, ensuring the strength of the angle adjuster.

In particular, the small continuous angle adjuster of the present invention is designed with flush step surfaces, which reduces the offset force in the force path of the angle adjuster. This not only optimizes the strength performance but also simplifies the manufacturing of the parts.

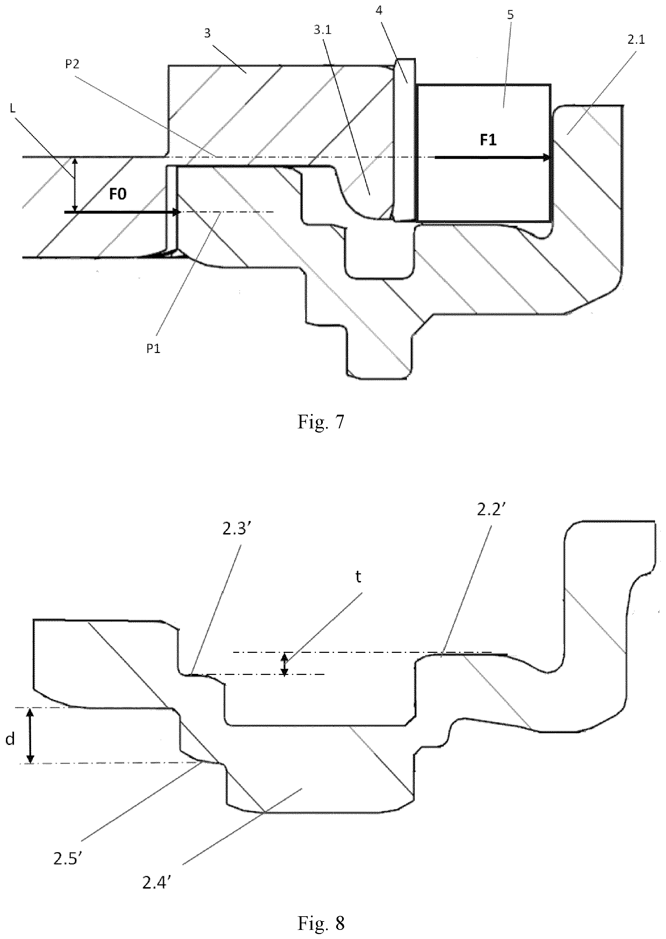

As shown in FIG.7, the internal force transmission path of the angle adjuster is: the external force F0 acts through the gear ring tooth plate 3, is transmitted through the friction bearing 4 to the wedge 5, and ultimately exerts the force of F1 on the neck ring 2.1 by the wedge 5. A line of action of the external force F0 is represented by a tooth force center plane P1, and a line of action of the force F1 is represented by a neck ring force center plane P2. When the two planes P1 and P2 are not on the same height plane, an offset force arm L is generated, which in turn generates an offset torque. The larger the offset torque, the more detrimental it is to the strength performance of the angle adjuster. Thus, the offset force arm L should be minimized as much as possible.

As shown in FIG.8, the gear tooth plate of the angle adjuster in the prior art is provided with a first step surface 2.2', a second step surface 2.3', a boss 2.4' and a third step surface 2.5', wherein the boss 2.4' is used for welding the angle adjuster to an external connecting plate, and the third step surface 2.5' is used for supporting the external connecting plate. The third step surface 2.5' is provided with a protruding height d so that the external connecting plate can be placed on the third step surface 2.5' while avoiding the clamping ring. Due to the characteristics of the precision stamping process, the second step surface 2.3' is formed simultaneously with the third step surface 2.5' as a stamping surface, and the distance between the second step surface 2.3' and the third step surface 2.5' is the material thickness of the gear tooth plate, meaning the position of the second step surface 2.3' depends on how high the protruding height d needs to be. Additionally, it is known that the gear ring tooth plate is provided with a flange boss, which is limited by the thickness and strength of the material, resulting in a smaller flange height. This necessitates raising the first step surface 2.2' for placing the wedge to approach the top surface of the flange boss, thereby creating a height difference ***t*** between the first step surface 2.2' and the second step surface 2.3'. This results in a larger offset force arm L (refer to Figure 7). Moreover, since the first step surface 2.2' and the second step surface 2.3' are not on the same plane, the stamping process requires multiple steps to manufacture the first step surface 2.2' and the second step surface 2.3' separately, making the process more complex.

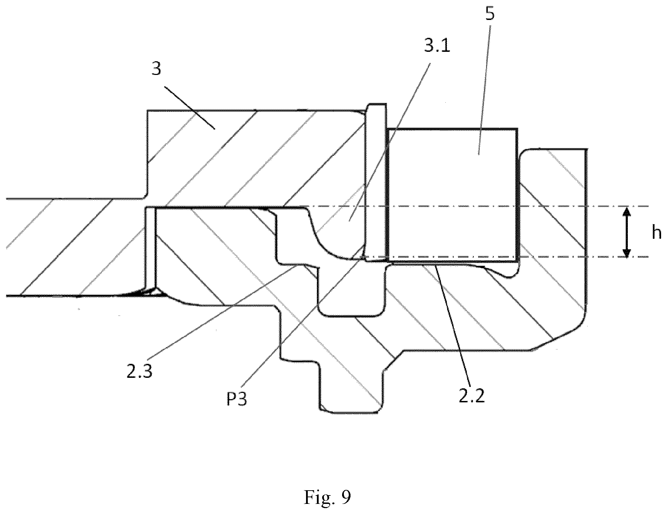

As shown in FIG.9, the gear tooth plate 2 of the present invention is also provided with the first step surface 2.2 and the second step surface 2.3. The first step surface 2.2 is the plane that supports the wedge 5 and needs to be as close as possible to the top surface P3 of the flange boss 3.1 of the gear ring tooth plate 3 to ensure that the wedge 5 maintains a relatively stable posture under force. The present invention increases the thickness of the gear ring tooth plate 3, allowing the height *h* of the flange boss 3.1 to be higher. The first step surface 2.2 does not need to be raised to adapt to the height ***h*** of the flange boss 3.1, and at the same time, the position of the second step surface 2.3 remains unchanged. Therefore, the first step surface 2.2 can be made to be on the same plane as the second step surface 2.3, eliminating the height difference and reducing the offset force arm L (refer to Figure 7), achieving the goal of optimizing strength performance. At the same time, from a manufacturing process perspective, the first step surface 2.2 and the second step surface 2.3 can be stamped out in one step, simplifying the manufacturing process.

The foregoing description refers to preferred embodiments of the present invention and is not intended to limit the scope of the present invention. Various changes can be made to the foregoing embodiments of the present invention. All simple and equivalent changes and modifications in accordance with the claims of the present invention and the content of the description fall into the protection scope of the patent of the present invention. What is not described in detail in the present invention is conventional technical content.

## Claims

1. A small continuous angle adjuster, comprising:
a gear tooth plate (2) and a gear ring tooth plate (3) that can rotate relative to each other, wherein the gear tooth plate (2) is provided with an outer tooth gear, wherein the gear ring tooth plate (3) is provided with an inner tooth ring, wherein the gear tooth plate (2) and the gear ring tooth plate (3) are connected with each other through the outer tooth gear and the inner tooth ring that mesh with each other, and wherein the gear tooth plate (2) is provided with a neck ring (2.1) that is concentric with the outer tooth gear; and
an eccentric member (5, 7) driven by a drive cam (6), wherein the eccentric member (5, 7) rotates in the circumferential direction to drive the relative rolling motion of the gear tooth plate (2) and the gear ring tooth plate (3);
wherein the neck ring (2.1) is provided with a center point (O), wherein the tooth surface of the outer tooth gear of the gear tooth plate (2) and the tooth surface of the inner tooth ring of the gear ring tooth plate (3) have a contact point (D), wherein the center point (O) and the contact point (D) are connected to form a first connecting line (OD),
wherein each tooth of the outer tooth gear of the gear tooth plate (2) is provided with a first working arc section (a-b), and the first working arc section (a-b) of a contact tooth of the gear tooth plate (2) is provided with a first arc section center point (O₁),
wherein each tooth of the inner tooth ring of the gear ring tooth plate (3) is provided with a second working arc section (c-d), and the second working arc section (c-d) of a contact tooth of the gear ring tooth plate (3) is provided with a second arc section center point (O₂),
wherein the first arc section center point (O₁) and the second arc section center point (O₂) are connected to form a second connecting line (O₁O₂),
wherein the contact point (D) is located on the second connecting line (O₁O₂), and an included angle between the first connecting line (OD) and the second connecting line (O₁O₂) ranges from 85 degrees to 95 degrees.

2. The small continuous angle adjuster according to claim 1, wherein the first working arc section (a-b) of the contact tooth of the gear tooth plate (2) is provided with a first arc radius (R₁), wherein the second working arc section (c-d) of the contact tooth of the gear ring tooth plate (3) is provided with a second arc radius (R₂), and wherein a ratio (R₁/R₂) of the first arc radius (R₁) to the second arc radius (R₂) is between 1.05 and 1.15.

3. The small continuous angle adjuster according to claim 1, wherein each tooth of the outer tooth gear of the gear tooth plate (2) is provided with a first tooth profile width (A), wherein each tooth of the inner tooth ring of the gear ring tooth plate (3) is provided with a second tooth profile width (B), and wherein a tooth width ratio (A/B) of the first tooth profile width (A) to the second tooth profile width (B) is between 1.1 and 1.6.

4. The small continuous angle adjuster according to claim 1, wherein the drive cam (6) is provided with a cylindrical segment (6.1) axially inserted into the neck ring (2.1).

5. The small continuous angle adjuster according to claim 4, wherein a clearance between the cylindrical segment (6.1) and the neck ring (2.1) is between 0.05mm and 0.15mm.

6. The small continuous angle adjuster according to claim 1, wherein the drive cam (6) is a single part formed as a whole.

7. The small continuous angle adjuster according to claim 1, wherein a wedge (5) and a spring (7) work together to define the eccentric member (5, 7) to press the outer tooth gear of the gear tooth plate (2) into the inner tooth ring of the gear ring tooth plate (3) at the meshing position.

8. The small continuous angle adjuster according to claim 7, wherein the gear tooth plate (2) is provided with a first step surface (2.2) for supporting the wedge (5), wherein the gear ring tooth plate (3) is provided with a flange boss (3.1), and the first step surface (2.2) is close to the top surface (P3) of the flange boss (3.1).

9. The small continuous angle adjuster according to claim 8, wherein the gear tooth plate (2) is provided with a boss for connecting the small continuous angle adjuster to an external connecting plate and a third step surface for supporting the external connecting plate, wherein the gear tooth plate (2) is also provided with a second step surface (2.3) formed simultaneously with the third step surface as a stamping surface, and wherein the first step surface (2.2) and the second step face (2.3) are on the same plane.

10. The small continuous angle adjuster according to claim 9, wherein a distance between the second step surface (2.3) and the third step surface is a material thickness of the gear tooth plate (2).

11. The small continuous angle adjuster according to claim 9, wherein the small continuous angle adjuster further comprises a clamping ring (1) for holding the gear tooth plate (2) and the gear ring tooth plate (3) together.

12. The small continuous angle adjuster according to claim 11, wherein the third step surface is provided with a protruding height (d) so that the external connecting plate is placed on the third step surface while avoiding the clamping ring (1).

13. The small continuous angle adjuster according to claim 7, wherein the wedge (5) is supported on the neck ring (2.1) by its curved inner surface, and carries the gear ring tooth plate (3) by its curved outer surface.

14. The small continuous angle adjuster according to claim 13, wherein the drive cam (6) is provided with a drive segment (6.2), wherein the wedge (5) is composed of two wedge-shaped segments, wherein the drive segment (6.2) is inserted into a clearance between narrow sides of the two wedge-shaped segments, and wherein two ends of the spring (7) are respectively connected to broad sides facing each other of the two wedge-shaped segments to force the two wedge-shaped segments to separate by acting on the wedge-shaped segments in the circumferential direction through the spring (7).

15. The small continuous angle adjuster according to claim 13, wherein the small continuous angle adjuster further comprises a friction bearing (4), which is arranged between the curved outer surface of the wedge (5) and a center hole (3.1) of the gear ring tooth plate (3).

16. The small continuous angle adjuster according to claim 13, wherein the small continuous angle adjuster further comprises a cover (8), which is mounted over the drive cam (6) and fixedly connected to the gear ring tooth plate (3).
